# EUROPEAN PATENT SPECIFICATION

(11) **EP 2 750 337 B1**
(45) Date of publication and mention of the grant of the patent: **29.03.2017**
(21) Application number: 11864755.1
(22) Date of filing: 20.09.2011
(51) Int. Cl.: H04L 12/715, H04J 14/02, H04L 12/735, H04L 12/707

(54) **SERVICE CROSS-LAYER SEPARATED PATH CALCULATION METHOD, DEVICE AND COMMUNICATION SYSTEM**
DURCH EINE SERVICE-QUERSCHICHT GETRENNTES PFADBERECHNUNGSVERFAHREN, VORRICHTUNG DAFÜR UND KOMMUNIKATIONSSYSTEM
PROCÉDÉ DE CALCUL DE CHEMIN SÉPARÉ INTER-COUCHE DE SERVICE, DISPOSITIF ET SYSTÈME DE COMMUNICATION

(43) Date of publication of application: 02.07.2014
(73) Proprietor: Huawei Technologies Co., Ltd., Longgang District Shenzhen, Guangdong 518129 (CN)
(72) Inventor: WU, Chuanjun, Shenzhen Guangdong 518129 (CN)
(74) Representative: Körber, Martin Hans
(86) International application number: PCT/CN2011/079875
(87) International publication number: WO 2012/149754

(56) References cited:
- CN-A- 101 217 460
- CN-A- 101 651 600
- JP-A- 2010 011 096
- US-A1- 2005 237 950
- HUA QU ET AL: "Service-oriented resource multi-backupable method for multi-layer networks", ACCESS SPACES (ISAS), 2011 1ST INTERNATIONAL SYMPOSIUM ON, IEEE, 17 June 2011 (2011-06-17), pages 260-265, XP031903834, DOI: 10.1109/ISAS.2011.5960959 ISBN: 978-1-4577-0716-2

## Description

### TECHNICAL FIELD

Embodiments of the present invention relate to the field of communications technologies, and in particular, to a method and an apparatus for computing cross-layer separated service paths, and a communications system.

### BACKGROUND

On a conventional core bearer network, a traffic pipe is generally provided by a bottom-layer physical network, and service routing planning and management are generally implemented by an upper-layer router network. The bottom-layer physical network is typically an optical transport network (Optical Transport Network, OTN for short). To ensure transmission quality, a core network generally needs to provide a capability against one fiber cut for each service. For example, a layer-by-layer protection method may be adopted to provide 1+1 link protection on the upper-layer router network, that is, an IP layer, first, and then perform 1+1 protection for each IP-layer path at an OTN layer. In this application scenario, the OTN layer requires four bandwidth resources to provide a service against one fiber cut failure.

The prior art further provides another technical solution against one fiber cut, which may be called a technical solution of IP+optical joint planning. Two separated paths are established on the IP layer first, and then a bearer pipe is established on the bottom-layer physical network for each IP-layer separated path, so that only two bandwidth resources are used to provide the service against one fiber cut. However, an algorithm that two separated paths are established on the IP layer first, and then a bearer pipe is established on the bottom-layer physical network is unreasonable and easy to cause service congestion.

US 2005/237950 A1 discloses a method for dynamic path protection in networks by finding two paths between a source node and a destination node in a network having multiple nodes and multiple links. A first path is found between the source node and the destination node using a routing algorithm and a model of the network. Each link has a cost and at least one risk identifier. The second path is found between the source node and the destination node using the routing algorithm and the modified model.

The document with tittle "Service-oriented Resource Multi-backupable Method for Multi- Layer Networks" discloses the concept of "multi-backupable" to provide different protection resource allocation for different services.

### SUMMARY

The present invention provides a method and an apparatus for computing cross-layer separated service paths, and a communications system, so as to ensure that an appropriate physical-layer pipe resource is allocated for each router-layer separated path and avoid service congestion due to an algorithm.

The present invention provides a method for computing cross-layer separated service paths, including:
acquiring path information about two physical-layer separated paths from a service starting point to a service end point on a physical network;
updating a link cost of each IP link segment on a router network according to the path information about the two physical-layer separated paths, wherein the updating the link cost of each IP link segment on the router network according to the path information about the two physical-layer separated paths comprises:
setting a link cost of IP link segments corresponding to the two physical-layer separated paths to a smaller value, and setting a link cost of other IP link segments to a larger value; and
computing path information about two corresponding router-layer separated paths on the router network according to the updated link cost of each IP link segment, wherein the computing path information about two corresponding router-layer separated paths on the router network according to the updated link cost of each IP link segment comprises:
computing, by the network node on the router network, the path information about the two router-layer separated paths according to the updated link cost of each IP link segment, wherein both the two router-layer separated paths have a minimum link cost sum.

The present invention further provides an apparatus for computing cross-layer separated service paths, including:
a first acquiring module, configured to acquire path information about two physical-layer separated paths from a service starting point to a service end point on a physical network;
a link cost updating module, configured to update a link cost of each IP link segment on a router network according to the path information about the two physical-layer separated paths, wherein the link cost updating module is specifically configured set a link cost of IP link segments corresponding to the two physical-layer separated paths to a smaller value, and set a link cost of other IP link segments to a larger value; and
a path acquiring module, configured to compute path information about two corresponding router-layer separated paths on the router network according to the updated link cost of each IP link segment, wherein the path acquiring module is specifically configured to compute the path information about the two corresponding router-layer separated paths on the router network according to the updated link cost of each IP link, wherein both the two router-layer separated paths have a minimum link cost sum.

The present invention further provides a communications system, including at least three network nodes of a router network and at least three corresponding network nodes of a physical network, where the preceding apparatus for computing cross-layer separated service paths is set on the network node of the router network, and a network node of the physical network is configured to compute path information about two physical-layer separated paths from a service starting point to a service end point on the physical network and send the path information about the two physical-layer separated paths from the service starting point to the service end point to the network node of the router network.

According to the method and apparatus for computing cross-layer separated service paths, and the communications system that are provided in embodiments of the present invention, during computation of cross-layer separated service paths, physical-layer separated paths on a physical network are acquired first, then a link cost of each IP link segment on a router network is updated according to path information about the physical-layer separated paths, and two separated paths are further obtained through computation at a router layer according to the updated link cost of each IP link segment. This ensures that an appropriate physical-layer pipe resource is allocated for each router-layer separated path and avoids service congestion due to an algorithm during allocation of physical-layer pipe resources for the two router-layer separated paths.

### BRIEF DESCRIPTION OF DRAWINGS

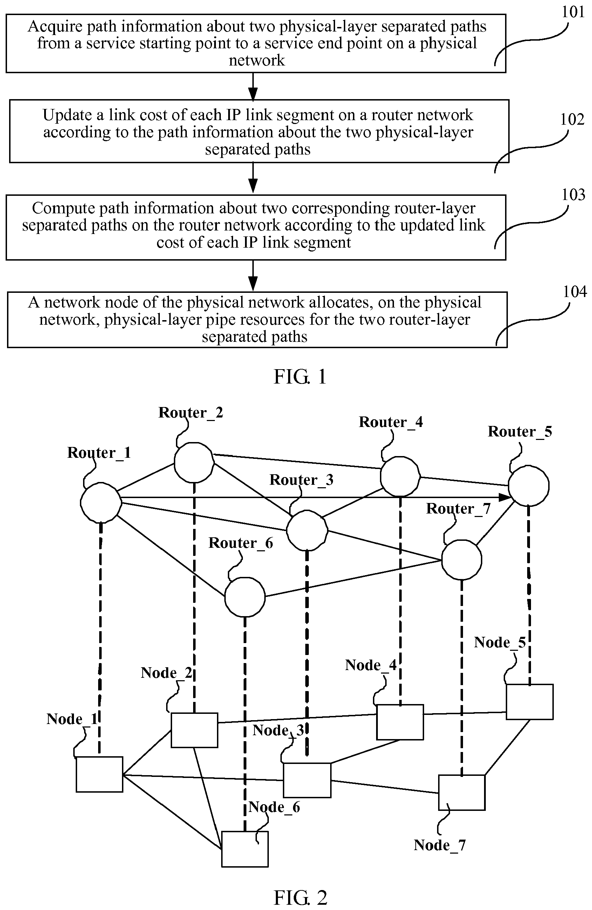

To describe the technical solutions in the embodiments of the present invention or in the prior art more clearly, the following briefly introduces the accompanying drawings required network. In view of this problem, an embodiment of the present invention provides a technical solution. FIG. 1 is a schematic flowchart of a method for computing cross-layer separated service paths according to an embodiment of the present invention. As shown in FIG. 1, the method includes the following steps:
Step 101: Acquire path information about two physical-layer separated paths from a service starting point to a service end point on a physical network.
Step 102: Update a link cost of each IP link segment on a router network according to the path information about the two physical-layer separated paths.
Step 103: Compute path information about two corresponding router-layer separated paths on the router network according to the updated link cost of each IP link segment.

In the preceding embodiment of the present invention, during computation of cross-layer separated service paths, physical-layer separated paths on a physical network are acquired first, then a link cost of each IP link segment on a router network is updated according to path information about the physical-layer separated paths, and path information about two separated paths at a router layer is further computed according to the updated link cost of each IP link segment. This ensures that an appropriate physical-layer pipe resource is allocated for each router-layer separated path and avoids service congestion due to an algorithm.

Specifically, in the preceding embodiment of the present invention, a network node of the physical network may obtain through computation the path information about the two physical-layer separated paths from the service starting point to the service end point on the physical network, and then send the path information to a network node of the router network. Step 101 may specifically be as follows:
The network node of the router network receives the path information about the two physical-layer separated paths from the service starting point to the service end point on the physical network, where the path information is sent by the network node of the physical network.

Before the network node of the physical network computes the path information about the physical-layer separated paths, the method further includes the following:
The network node of the router network sends a notification message for requesting computation of the path information about the two physical-layer separated paths from the service starting point to the service end point to the network node of the physical network; that is, the router network node implements a control function, and the network node of the physical network performs a specific operation.

In addition, in step 102, the updating a link cost of each IP link segment on a router network may specifically be as follows:
The network node of the router network updates the link cost of each IP link segment on the router network according to the path information about the two physical-layer separated paths, sets a link cost of IP link segments corresponding to the two physical-layer separated paths to a smaller value, and sets a link cost of other IP link segments to a larger value. The smaller value and the larger value are set relatively, which mainly aims to facilitate computation of the path information about the router-layer separated paths.

In step 103, the computing path information about two corresponding router-layer separated paths on the router network may specifically be as follows:
The network node of the router network computes the path information about the two router-layer separated paths according to the updated link cost of each IP link segment, where the two router-layer separated paths have a minimum link cost sum.

Further, in the preceding embodiment, after the path information about the two router-layer separated paths is obtained through computation in step 103, as shown in FIG. 1, the method may further include the following step:
Step 104: A network node of the physical network allocates, on the physical network, physical-layer pipe resources for the two router-layer separated paths.

Specifically, step 104 may specifically be as follows: First, one of the two router-layer separated paths is determined as a working path and the other one as a protection path; then, a physical-layer pipe resource is allocated for each IP link segment that the working path passes through at the router layer, and a physical-layer pipe resource is allocated for each IP link segment that the protection path passes through at the router layer.

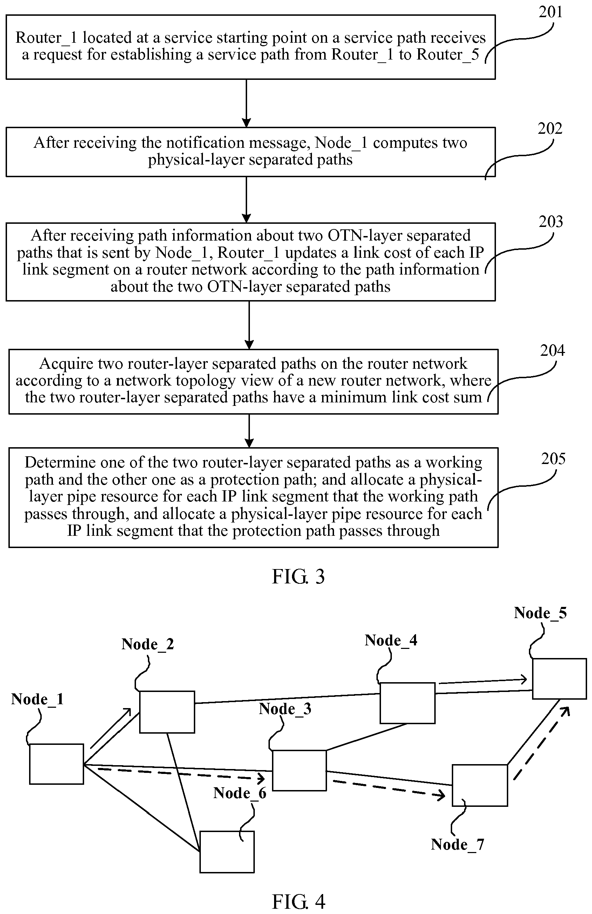

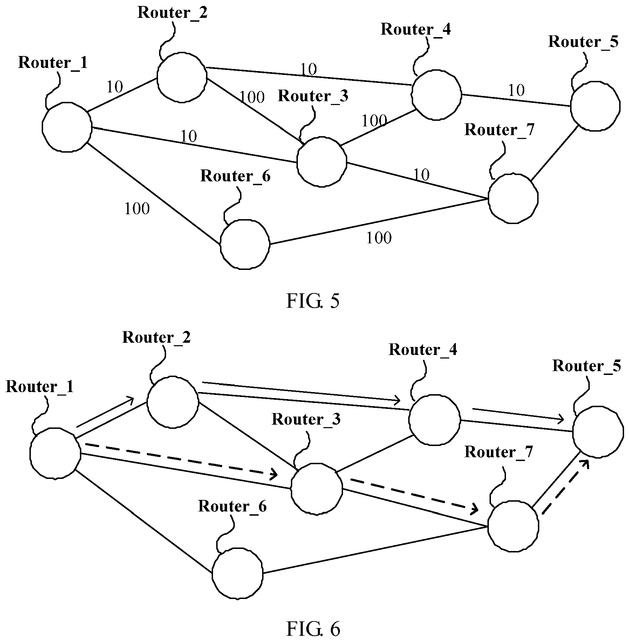

An embodiment of the present invention further provides a specific embodiment of a method for computing cross-layer separated service paths. A network topology is shown in FIG. 2. It includes a router network located at an upper-layer, that is, includes network nodes Router_1, Router_2, Router_3, Router_4, Router_5, Router_6, and Router_7 of the router network, and network nodes Node_1, Node_2, Node_3, Node_4, Node_5, Node_6, and Node_7 of a bottom-layer physical network (taking an OTN network as an example). To establish a service path from Router_1 to Router_5 and provide a capability against one fiber cut, according to the technical solutions provided in the present invention, the method may include the following steps, as shown in FIG. 3:
Step 201: Router_1 located at a service starting point on a service path receives a request for establishing a service path from Router_1 to Router_5, and sends a notification message for requesting computation of path information about two physical-layer separated paths from Node_1 to Node_5 to a corresponding network node Node_1 on an OTN.
Step 202: After receiving the notification message, Node_1 computes the two physical-layer separated paths, that is, Node_1 - Node_3 - Node_7 - Node_5 and Node_1 - Node_2 - Node_4 - Node_5, where the two physical-layer separated paths may specifically be as shown in FIG. 4 and may also be called OTN-layer separated paths in this embodiment. Then, Node_1 sends the path information about the two OTN-layer separated paths to Router_1.
Step 203: After receiving the path information about the two OTN-layer separated paths that is sent by Node_1, Router_1 updates a link cost of each IP link segment on a router network according to the path information about the two OTN-layer separated paths, sets a link cost of IP link segments corresponding to the two OTN-layer separated paths to a smaller value, and a link cost of other IP link segments to a larger value, so as to obtain a network topology view of a new router network. As shown in FIG. 5, the link cost of the IP link segments corresponding to the OTN-layer separated paths is set to 10 and the link cost of other IP link segments is set to 100.
Step 204: Acquire two router-layer separated paths on the router network according to the network topology view of the new router network, where both the two router-layer separated paths have a minimum link cost sum, and the two paths may specifically be Router_1 - Router_5 3 - Router_7 - Router_5 and Router_1 - Router_2 - Router_4 - Router_5, as shown in FIG. 6.
Step 205: Determine one of the two router-layer separated paths as a working path and the other one as a protection path; and allocate a physical-layer pipe resource for each IP link segment that the working path passes through, and allocate a physical-layer pipe resource for each IP link segment that the protection path passes through, where physical-layer pipe resources required by the protection path are excluded during allocation of the physical-layer pipe resource for each IP link segment that the working path passes through, so as to reserve sufficient physical-layer pipe resources for the protection path, and physical-layer pipe resources required by the working path are excluded during allocation of the physical-layer pipe resource for each IP link segment that the protection path passes through, so as to reserve sufficient physical-layer pipe resources for the working path. In this embodiment, the physical-layer pipe resources are OTN-layer pipe resources.

Specifically, the working path may be Router_1 - Router_3 - Router_7 - Router_5, and the allocating OTN-layer pipe resources for the working path may specifically include the following:
A) Establish a bottom-layer pipe resource for an IP link segment from Router_1 to Router_3 (which may also be called a logical link from Router_1 to Router_3). Based on the principle of optimality, a pipe may be established from Node_1 to Node_3.
B) Establish a bottom-layer pipe resource for an IP link segment from Router_3 to Router_7 (which may also be called a logical link from Router_3 to Router_7). In consideration of that the working path and the protection path require respective bottom-layer pipe resources, in this embodiment, the other OTN-layer separated path Node_1 - Node_2 - Node_4 - Node_5 is excluded, that is, the bottom-layer pipe resources required by the protection path are excluded during establishment of the bottom-layer pipe resources for the working path. Therefore, in this step, a pipe is established from Node_3 to Node_7.
C) Establish a bottom-layer pipe resource for an IP link segment from Router_7 to Router_5 (which may also be called a logical link from Router_7 to Router_5). In consideration of that the working path and the protection path require respective bottom-layer pipe resources, in this embodiment, the other OTN-layer separated path Node_1 - Node_2 - Node_4 - Node_5 is excluded, that is, the bottom-layer pipe resources required by the protection path are excluded during establishment of the bottom-layer pipe resources. Therefore, in this step, a pipe is established from Node_7 to Node_5.

After the OTN-layer pipe resources are allocated for the working path, OTN-layer pipe resources can be allocated for the protection path, which may specifically include the following:
A) Establish a bottom-layer pipe resource for an IP link segment from Router_1 to Router_2 (which may also be called a logical link from Router_1 to Router_2). In this situation, the OTN-layer pipe resources allocated for the working path are excluded, and a pipe is established from Node_1 to Node_2.
B) Establish a bottom-layer pipe resource for an IP link segment from Router_2 to Router_4 (which may also be called a logical link from Router_2 to Router_4). In this situation, the OTN-layer pipe resources allocated for the working path are excluded, and a pipe is established from Node_2 to Node_4.
C) Establish a bottom-layer pipe resource for an IP link segment from Router_4 to Router_5 (which may also be called a logical link from Router_4 to Router_5). In this situation, the OTN-layer pipe resources allocated for the working path are excluded, and a pipe is established from Node_4 to Node_5.

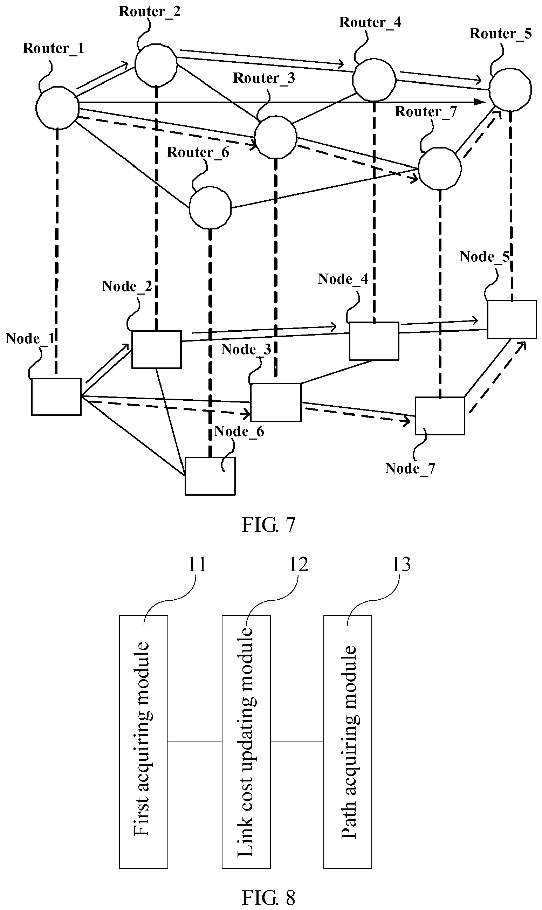

In this embodiment, the OTN-layer pipe resources are allocated for both the working path and the protection path. The established cross-layer separated service paths may specifically be as shown in FIG. 7.

The present invention further provides an apparatus for computing cross-layer separated service paths. FIG. 8 is a schematic structural diagram of an apparatus for computing cross-layer separated service paths according to an embodiment of the present invention. As shown in FIG. 8, the apparatus includes a first acquiring module 11, a link cost updating module 12, and a path acquiring module 13. The first acquiring module 11 is configured to acquire path information about two physical-layer separated paths from a service starting point to a service end point on a physical network. The link cost updating module 12 is configured to update a link cost of each IP link segment on a router network according to the path information about the two physical-layer separated paths. The path acquiring module 13 is configured to compute path information about two corresponding router-layer separated paths on the router network according to the updated link cost of each IP link segment.

In the preceding embodiment of the present invention, during computation of cross-layer separated service paths, physical-layer separated paths on a physical network are acquired first, then a link cost of each IP link segment on a router network is updated according to path information about the physical-layer separated paths, and two separated paths at a router layer are further computed according to the updated link cost of each IP link segment. This ensures that an appropriate physical-layer pipe resource is allocated for each router-layer separated path and avoids service congestion due to an algorithm during computation of cross-layer separated service paths in the prior art.

In the preceding embodiment of the present invention, the first acquiring module 11 may be specifically configured to receive the path information about the two physical-layer separated paths from the service starting point to the service end point on the physical network, where the path information about the two physical-layer separated paths from the service starting point to the service end point on the physical network is sent by a network node of the physical network and obtained through computation by the network node of the physical network. After the network node of the physical network obtains the path information about the two physical-layer separated paths, a sending module sends the path information to the first acquiring module 11 on a network node of the router network. Further, before the network node of the physical network computes the path information about the two physical-layer separated paths from the service starting point to the service end point, the network node of the router network may send a notification message for requesting computation of the path information about the two physical-layer separated paths from the service starting point to the service end point to the network node of the physical network.

In the preceding embodiment of the present invention, the link cost updating module 12 may be specifically configured to update the link cost of each IP link segment on the router network according to the path information about the two physical-layer separated paths, set a link cost of IP link segments corresponding to the two physical-layer separated paths to a smaller value, and set a link cost of other IP link segments to a larger value. The path acquiring module 13 is specifically configured to compute the path information about the two corresponding router-layer separated paths on the router network according to the updated link cost of each IP link segment, where the two router-layer separated paths have a minimum link cost sum.

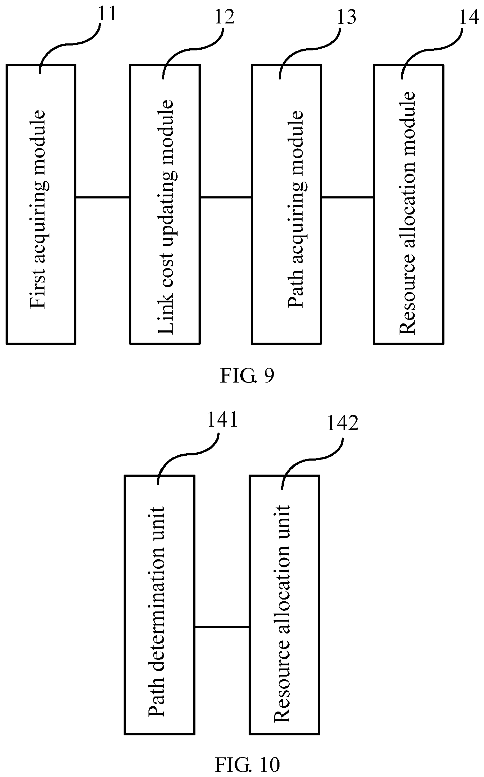

As shown in FIG. 9, the apparatus for computing cross-layer separated service paths in the preceding embodiment may further include a resource allocation module 14. The resource allocation module 14 is configured to allocate, on the physical network, physical-layer pipe resources for the two router-layer separated paths.

Specifically, as shown in FIG. 10, the resource allocation module 14 may include a path determination unit 141 and a resource allocation unit 142. The path determination unit 141 is configured to determine one of the two router-layer separated paths as a working path and the other one as a protection path. The resource allocation unit 142 is configured to allocate a physical-layer pipe resource for each IP link segment of a router-layer separated path that the working path passes through, and allocate a physical-layer pipe resource for each IP link segment of a router-layer separated path that the protection path passes through.

The apparatus for computing cross-layer separated service paths that is provided in this embodiment of the present invention may be integrated into a network node on the router network or may also function as a PCE (Path Computation Element, path computation element) on the network.

An embodiment of the present invention further provides a communications system. The communications system includes at least three network nodes of a router network and at least three corresponding network nodes of a physical network. In addition, the apparatus for computing cross-layer separated service paths in any one of the preceding embodiments is set on the network node of the router network. A network node of the physical network is configured to compute path information about two physical-layer separated paths from a service starting point to a service end point on the physical network and send the path information about the two physical-layer separated paths from the service starting point to the service end point to the network node of the router network. In a specific embodiment of the present invention, the network node of the physical network and the network node of the router network may be a same physical entity, that is, a same integrated node, but the functions of the network node of the physical network and those of the network node of the router network are implemented by different devices or modules.

In the preceding embodiment of the present invention, during computation of cross-layer separated service paths, physical-layer separated paths on a physical network are acquired first, then a link cost of each IP link segment on a router network is updated according to path information about the physical-layer separated paths, and two separated paths are further obtained through computation at a router layer according to the updated link cost of each IP link segment. This ensures that an appropriate physical-layer pipe resource is allocated for each router-layer separated path during allocation of physical-layer pipe resources for the two router-layer separated paths and avoids service congestion due to an algorithm during computation of cross-layer separated service paths in the prior art.

A person of ordinary skill in the art should understand that, all or part of the steps of the foregoing method embodiments may be implemented by a program instructing relevant hardware. The foregoing program may be stored in a computer readable storage medium. When the program runs, the above steps included in the method embodiments are performed. The foregoing storage medium may be any medium capable of storing program codes, such as a ROM, a RAM, a magnetic disk, or an optical disk.

Finally, it should be noted that, the foregoing embodiments are merely intended for describing the technical solutions of the present invention rather than limiting the present invention. Although the present invention is described in detail with reference to the foregoing embodiments, a person of ordinary skill in the art may understand that, they may still make modifications to the technical solutions described in the foregoing embodiments, or make equivalent replacements to a part of the technical features thereof, as long as these modifications or replacements do not make the essence of corresponding technical solutions depart from the scope of the technical solutions of the embodiments of the present invention.

## Claims

1. A method for computing cross-layer separated service paths, comprising:
acquiring (101, 202) path information about two physical-layer separated paths from a service starting point to a service end point on a physical network;
updating (102, 203) a link cost of each IP link segment on a router network according to the path information about the two physical-layer separated paths, wherein the updating (102) the link cost of each IP link segment on the router network according to the path information about the two physical-layer separated paths comprises:
setting, by a network node of the router network, a link cost of IP link segments corresponding to the two physical-layer separated paths to a smaller value, and setting a link cost of other IP link segments to a larger value; and
computing (103, 204) path information about two corresponding router-layer separated paths on the router network according to the updated link cost of each IP link segment, wherein the computing (103, 204) path information about two corresponding router-layer separated paths on the router network according to the updated link cost of each IP link segment comprises:
computing (103, 204), by the network node on the router network, the path information about the two router-layer separated paths according to the updated link cost of each IP link segment, wherein both the two router-layer separated paths have a minimum link cost sum.

2. The method for computing cross-layer separated service paths according to claim 1, wherein the acquiring path information about two physical-layer separated paths from a service starting point to a service end point on a physical network comprises:
receiving, by the network node of the router network, the path information about the two physical-layer separated paths from the service starting point to the service end point on the physical network, wherein the path information about the two physical-layer separated paths from the service starting point to the service end point on the physical network is sent by a network node of the physical network and obtained through computation by the network node of the physical network.

3. The method for computing cross-layer separated service paths according to claim 2, before the obtaining through computation, by the network node of the physical network, the path information about the two physical-layer separated paths from the service starting point to the service end point on the physical network, further comprising:
sending (201), by the network node of the router network, a notification message for requesting computation of the path information about the two physical-layer separated paths from the service starting point to the service end point to the network node of the physical network.

4. The method for computing cross-layer separated service paths according to any one of claims 1-3, further comprising:
allocating (104, 205), on the physical network by the network node of the physical network, physical-layer pipe resources for the two router-layer separated paths.

5. The method for computing cross-layer separated service paths according to claim 4, wherein the allocating (104, 205), by the network node of the physical network, on the physical network, physical-layer pipe resources for the two router-layer separated paths comprises:
determining, by the network node of the physical network, one of the two router-layer separated paths as a working path and the other one as a protection path; and
allocating, by the network node of the physical network, a physical-layer pipe resource for each IP link segment that the working path passes through, and allocating a physical-layer pipe resource for each IP link segment that the protection path passes through.

6. The method for computing cross-layer separated service paths according to claim 5, wherein the allocating (104, 205), by the network node of the physical network, a physical-layer pipe resource for each IP link segment that the working path passes through, and allocating a physical-layer pipe resource for each IP link segment that the protection path passes through specifically comprises:
excluding, during the allocation of the physical-layer pipe resource for each IP link segment that the working path passes through, a physical-layer pipe resource required by each IP link segment that the protection path passes through; and
excluding, during the allocation of the physical-layer pipe resource for each IP link segment that the protection path passes through, a physical-layer pipe resource required by each IP link segment that the working path passes through.

7. An apparatus for computing cross-layer separated service paths, comprising:
a first acquiring module (11), configured to acquire path information about two physical-layer separated paths from a service starting point to a service end point on a physical network;
a link cost updating module (12), configured to update a link cost of each IP link segment on a router network according to the path information about the two physical-layer separated paths, wherein the link cost updating module is specifically configured to set a link cost of IP link segments corresponding to the two physical-layer separated paths to a smaller value, and set a link cost of other IP link segments to a larger value; and
a path acquiring module (13), configured to compute path information about two corresponding router-layer separated paths on the router network according to the updated link cost of each IP link segment, wherein the path acquiring module is specifically configured to compute the path information about the two corresponding router-layer separated paths on the router network according to the updated link cost of each IP link, wherein both the two router-layer separated paths have a minimum link cost sum.

8. The apparatus for computing cross-layer separated service paths according to claim 7, further comprising:
a resource allocation module (14), configured to allocate, on the physical network, physical-layer pipe resources for the two router-layer separated paths.

9. The apparatus for computing cross-layer separated service paths according to claim 8, wherein the resource allocation module comprises:
a path determination unit (141), configured to determine one of the two router-layer separated paths as a working path and the other one as a protection path; and
a resource allocation unit (142), configured to allocate a physical-layer pipe resource for each IP link segment that the working path passes through, and allocate a physical-layer pipe resource for each IP link segment that the protection path passes through.

10. The apparatus for computing cross-layer separated service paths according to claim 9, wherein the resource allocation unit (142) is specifically configured to:
exclude, during the allocation of the physical-layer pipe resource for each IP link segment that the working path passes through, a physical-layer pipe resource required by each IP link segment that the protection path passes through; and
exclude, during the allocation of the physical-layer pipe resource for each IP link segment that the protection path passes through, a physical-layer pipe resource required by each IP link segment that the working path passes through.

11. A communications system, comprising at least three network nodes of a router network and at least three corresponding network nodes of a physical network, wherein the apparatus for computing cross-layer separated service paths according to any one of claims 7-10 is set on the network node of the router network, and a network node of the physical network is configured to compute path information about two physical-layer separated paths from a service starting point to a service end point on the physical network and send the path information about the two physical-layer separated paths from the service starting point to the service end point to the network node of the router network.

## Patentansprüche

1. Verfahren zum Berechnen von schichtübergreifenden getrennten Service-Pfaden, umfassend:
Gewinnen (101,202) von Pfadinformationen über zwei getrennte Pfade der physischen Schicht von einem Service-Ausgangspunkt zu einem Service-Endpunkt in einem physischen Netz;
Aktualisieren (102, 203) von Streckenkosten jedes IP-Streckensegments in einem Routernetz gemäß den Pfadinformationen über die beiden getrennten Pfade der physischen Schicht, wobei das Aktualisieren (102) der Streckenkosten jedes IP-Streckensegments im Routernetz gemäß den Pfadinformationen über die beiden getrennten Pfade der physischen Schicht umfasst:
Einstellen, durch einen Netzknoten des Routernetzes, von Streckenkosten von IP-Streckensegmenten, die den beiden getrennten Pfaden der physischen Schicht entsprechen, auf einen kleineren Wert und Einstellen der Streckenkosten anderer IP-Streckensegmente auf einen höheren Wert; und
Berechnen (103, 204) von Pfadinformationen über zwei entsprechende getrennte Pfade der Routerschicht im Routernetz gemäß den aktualisierten Streckenkosten jedes IP-Streckensegments, wobei das Berechnen (103, 204) von Pfadinformationen über zwei entsprechende getrennte Pfade der Routerschicht im Routernetz gemäß den aktualisierten Streckenkosten jedes IP-Streckensegments umfasst:
Berechnen (103, 204), durch den Netzknoten im Routernetz, der Pfadinformationen über die beiden getrennten Pfade der Routerschicht gemäß den aktualisierten Streckenkosten jedes IP-Streckensegments, wobei beide getrennte Pfade der Routerschicht eine Mindeststreckenkostensumme aufweisen.

2. Verfahren zum Berechnen von schichtübergreifenden getrennten Service-Pfaden gemäß Anspruch 1, wobei das Gewinnen von Pfadinformationen über zwei getrennte Pfade der physischen Schicht von einem Service-Ausgangspunkt zu einem Service-Endpunkt in einem physischen Netz umfasst:
Empfangen, durch den Netzknoten des Routernetzes, der Pfadinformationen über die beiden getrennten Pfade der physischen Schicht vom Service-Ausgangspunkt zum Service-Endpunkt im physischen Netz, wobei die Pfadinformationen über die beiden getrennten Pfade der physischen Schicht vom Service-Ausgangspunkt zum Service-Endpunkt im physischen Netz von einem Netzknoten des physischen Netzes gesendet und durch Berechnung durch den Netzknoten des physischen Netzes erhalten werden.

3. Verfahren zum Berechnen von schichtübergreifenden getrennten Service-Pfaden gemäß Anspruch 2, vor dem Erhalten durch Berechnung, durch den Netzknoten des physischen Netzes, der Pfadinformationen über die beiden getrennten Pfade der physischen Schicht vom Service-Ausgangspunkt zum Service-Endpunkt im physischen Netz, ferner umfassend:
Senden (201), durch den Netzknoten des Routernetzes, einer Benachrichtigung zum Anfordern der Berechnung der Pfadinformationen über die beiden getrennten Pfade der physischen Schicht vom Service-Ausgangspunkt zum Service-Endpunkt an den Netzknoten des physischen Netzes.

4. Verfahren zum Berechnen von schichtübergreifenden getrennten Service-Pfaden gemäß einem der Ansprüche 1-3, ferner umfassend:
Zuteilen (104, 205), im physischen Netz durch den Netzknoten des physischen Netzes, von Leitungsressourcen der physischen Schicht für die beiden getrennten Pfade der Routerschicht.

5. Verfahren zum Berechnen von schichtübergreifenden getrennten Service-Pfaden gemäß Anspruch 4, wobei das Zuteilen (104, 205), durch den Netzknoten des physischen Netzes im physischen Netz, von Leitungsressourcen der physischen Schicht für die beiden getrennten Pfade der Routerschicht umfasst:
Bestimmen, durch den Netzknoten des physischen Netzes, eines der beiden getrennten Pfade der Routerschicht als Arbeitspfad und des anderen als Schutzpfad; und
Zuteilen, durch den Netzknoten des physischen Netzes, einer Leitungsressource der physischen Schicht für jedes IP-Streckensegment, über das der Arbeitspfad verläuft, und Zuteilen einer Leitungsressource der physischen Schicht für jedes IP-Streckensegment, über das der Schutzpfad verläuft.

6. Verfahren zum Berechnen von schichtübergreifenden getrennten Service-Pfaden gemäß Anspruch 5, wobei das Zuteilen (104, 205), durch den Netzknoten des physischen Netzes, einer Leitungsressource der physischen Schicht für jedes IP-Streckensegment, über das der Arbeitspfad verläuft, und das Zuteilen einer Leitungsressource der physischen Schicht für jedes IP-Streckensegment, über das der Schutzpfad verläuft, speziell umfasst:
Ausschließen, während der Zuteilung der Leitungsressource der physischen Schicht für jedes IP-Streckensegment, über das der Arbeitspfad verläuft, einer Leitungsressource der physischen Schicht, die für jedes IP-Streckensegment benötigt wird, über das der Schutzpfad verläuft; und
Ausschließen, während der Zuteilung der Leitungsressource der physischen Schicht für jedes IP-Streckensegment, über das der Schutzpfad verläuft, einer Leitungsressource der physischen Schicht, die für jedes IP-Streckensegment benötigt wird, über das der Arbeitspfad verläuft.

7. Vorrichtung zum Berechnen von schichtübergreifenden getrennten Service-Pfaden, umfassend:
ein erstes Gewinnungsmodul (11), das dafür ausgelegt ist, Pfadinformationen über zwei getrennte Pfade der physischen Schicht von einem Service-Ausgangspunkt zu einem Service-Endpunkt in einem physischen Netz zu gewinnen;
ein Streckenkostenaktualisierungsmodul (12), das dafür ausgelegt ist, die Streckenkosten jedes IP-Streckensegments in einem Routernetz gemäß den Pfadinformationen über die beiden getrennten Pfade der physischen Schicht zu aktualisieren, wobei das Streckenkostenaktualisierungsmodul speziell dafür ausgelegt ist, die Streckenkosten von IP-Streckensegmenten, die den beiden getrennten Pfaden der physischen Schicht entsprechen, auf einen kleineren Wert einzustellen und die Streckenkosten anderer IP-Streckensegmente auf einen höheren Wert einzustellen; und ein Pfadgewinnungsmodul (13), das dafür ausgelegt ist, Pfadinformationen über zwei entsprechende getrennte Pfade der Routerschicht im Routernetz gemäß den aktualisierten Streckenkosten jedes IP-Streckensegments zu berechnen, wobei das Pfadgewinnungsmodul speziell dafür ausgelegt ist, die Pfadinformationen über die beiden entsprechenden getrennten Pfade der Routerschicht im Routernetz gemäß den aktualisierten Streckenkosten jedes IP-Streckensegments zu berechnen, wobei beide getrennte Pfade der Routerschicht eine Mindeststreckenkostensumme aufweisen.

8. Vorrichtung zum Berechnen von schichtübergreifenden getrennten Service-Pfaden gemäß Anspruch 7, ferner umfassend:
ein Ressourcenzuteilungsmodul (14), das dafür ausgelegt ist, im physischen Netz Leitungsressourcen der physischen Schicht für die beiden getrennten Pfade der Routerschicht zuzuteilen.

9. Vorrichtung zum Berechnen von schichtübergreifenden getrennten Service-Pfaden gemäß Anspruch 8, wobei das Ressourcenzuteilungsmodul umfasst:
eine Pfadbestimmungseinheit (141), die dafür ausgelegt ist, einen der beiden getrennten Pfade der Routerschicht als Arbeitspfad und den anderen als Schutzpfad zu bestimmen; und
eine Ressourcenzuteilungseinheit (142), die dafür ausgelegt ist, eine Leitungsressource der physischen Schicht für jedes IP-Streckensegment zuzuteilen, über das der Arbeitspfad verläuft, und eine Leitungsressource der physischen Schicht für jedes IP-Streckensegment zuzuteilen, über das der Schutzpfad verläuft.

10. Vorrichtung zum Berechnen von schichtübergreifenden getrennten Service-Pfaden gemäß Anspruch 9, wobei die Ressourcenzuteilungseinheit (142) speziell ausgelegt ist zum:
Ausschließen, während der Zuteilung der Leitungsressource der physischen Schicht für jedes IP-Streckensegment, über das der Arbeitspfad verläuft, einer Leitungsressource der physischen Schicht, die für jedes IP-Streckensegment benötigt wird, über das der Schutzpfad verläuft; und
Ausschließen, während der Zuteilung der Leitungsressource der physischen Schicht für jedes IP-Streckensegment, über das der Schutzpfad verläuft, einer Leitungsressource der physischen Schicht, die für jedes IP-Streckensegment benötigt wird, über das der Arbeitspfad verläuft.

11. Kommunikationssystem, umfassend wenigstens drei Netzknoten eines Routernetzes und wenigstens drei entsprechende Netzknoten eines physischen Netzes, wobei die Vorrichtung zum Berechnen von schichtübergreifenden getrennten Service-Pfaden gemäß einem der Ansprüche 7-10 am Netzknoten des Routernetzes eingerichtet ist und ein Netzknoten des physischen Netzes dafür ausgelegt ist, Pfadinformationen über zwei getrennte Pfade der physischen Schicht von einem Service-Ausgangspunkt zu einem Service-Endpunkt im physischen Netz zu berechnen und die Pfadinformationen über die beiden getrennten Pfade der physischen Schicht vom Service-Ausgangspunkt zum Service-Endpunkt an den Netzknoten des Routernetzes zu senden.

## Revendications

1. Procédé permettant de calculer des chemins de service séparés inter-couche, comprenant les étapes suivantes :
acquérir (101, 202) des informations de chemin concernant deux chemins séparés de couche physique depuis un point de début de service jusqu'à un point de fin de service sur un réseau physique ;
mettre à jour (102, 203) un coût de liaison de chaque segment de liaison IP sur un réseau routeur selon les informations de chemin concernant les deux chemins séparés de couche physique, l'étape consistant à mettre à jour (102) le coût de liaison de chaque segment de liaison IP sur le réseau routeur selon les informations de chemin concernant les deux chemins séparés de couche physique comprenant :
fixer, par un noeud de réseau du réseau routeur, un coût de liaison de segments de liaison IP correspondant aux deux chemins séparés de couche physique à une valeur inférieure, et fixer un coût de liaison d'autres segments de liaison IP à une valeur supérieure ; et
calculer (103, 204) des informations de chemin concernant deux chemins séparés de couche routeur correspondants sur le réseau routeur selon le coût de liaison mis à jour de chaque segment de liaison IP, l'étape consistant à calculer (103, 204) des informations de chemin concernant deux chemins séparés de couche routeur correspondants sur le réseau routeur selon le coût de liaison mis à jour de chaque segment de liaison IP comprenant :
calculer (103, 204), par le noeud de réseau sur le réseau routeur, les informations de chemin concernant les deux chemins séparés de couche routeur selon le coût de liaison mis à jour de chaque segment de liaison IP, les deux chemins séparés de couche routeur ayant une somme de coûts de liaison minimum.

2. Procédé permettant de calculer des chemins de service séparés inter-couche selon la revendication 1, dans lequel l'étape consistant à acquérir des informations de chemin concernant deux chemins séparés de couche physique depuis un point de début de service jusqu'à un point de fin de service sur un réseau physique comprend :
recevoir, par le noeud de réseau du réseau routeur, les informations de chemin concernant les deux chemins séparés de couche physique depuis le point de début de service jusqu'au point de fin de service sur le réseau physique, les informations de chemin concernant les deux chemins séparés de couche physique depuis le point de début de service jusqu'au point de fin de service sur le réseau physique étant envoyées par un noeud de réseau du réseau physique et obtenues par l'intermédiaire d'un calcul par le noeud de réseau du réseau physique.

3. Procédé permettant de calculer des chemins de service séparés inter-couche selon la revendication 2, avant l'étape consistant à obtenir par l'intermédiaire d'un calcul, par le noeud de réseau du réseau physique, les informations de chemin concernant les deux chemins séparés de couche physique depuis le point de début de service jusqu'au point de fin de service sur le réseau physique, comprenant en outre :
envoyer (201), par le noeud de réseau du réseau routeur, un message de notification pour demander un calcul des informations de chemin concernant les deux chemins séparés de couche physique depuis le point de début de service jusqu'au point de fin de service au noeud de réseau du réseau physique.

4. Procédé permettant de calculer des chemins de service séparés inter-couche selon l'une quelconque des revendications 1-3, comprenant en outre l'étape suivante :
attribuer (104, 205), sur le réseau physique par le noeud de réseau du réseau physique, des ressources de canal de communication de couche physique pour les deux chemins séparés de couche routeur.

5. Procédé permettant de calculer des chemins de service séparés inter-couche selon la revendication 4, dans lequel l'étape consistant à attribuer (104, 205), par le noeud de réseau du réseau physique, sur le réseau physique, des ressources de canal de communication de couche physique pour les deux chemins séparés de couche routeur comprend :
déterminer, par le noeud de réseau du réseau physique, un des deux chemins séparés de couche routeur comme un chemin de travail et l'autre comme un chemin de protection ; et
attribuer, par le noeud de réseau du réseau physique, une ressource de canal de communication de couche physique pour chaque segment de liaison IP que le chemin de travail traverse, et attribuer une ressource de canal de communication de couche physique pour chaque segment de liaison IP que le chemin de protection traverse.

6. Procédé permettant de calculer des chemins de service séparés inter-couche selon la revendication 5, dans lequel l'étape consistant à attribuer (104, 205), par le noeud de réseau du réseau physique, une ressource de canal de communication de couche physique pour chaque segment de liaison IP que le chemin de travail traverse, et à attribuer une ressource de canal de communication de couche physique pour chaque segment de liaison IP que le chemin de protection traverse comprend spécifiquement :
exclure, durant l'attribution de la ressource de canal de communication de couche physique pour chaque segment de liaison IP que le chemin de travail traverse, une ressource de canal de communication de couche physique requise par chaque segment de liaison IP que le chemin de protection traverse ; et
exclure, durant l'attribution de la ressource de canal de communication de couche physique pour chaque segment de liaison IP que le chemin de protection traverse, une ressource de canal de communication de couche physique requise par chaque segment de liaison IP que le chemin de travail traverse.

7. Appareil permettant de calculer des chemins de service séparés inter-couche, comprenant :
un premier module d'acquisition (11), configuré pour acquérir des informations de chemin concernant deux chemins séparés de couche physique depuis un point de début de service jusqu'à un point de fin de service sur un réseau physique ;
un module de mise à jour de coût de liaison (12), configuré pour mettre à jour un coût de liaison de chaque segment de liaison IP sur un réseau routeur selon les informations de chemin concernant les deux chemins séparés de couche physique, le module de mise à jour de coût de liaison étant configuré spécifiquement pour fixer un coût de liaison de segments de liaison IP correspondant aux deux chemins séparés de couche physique à une valeur inférieure, et fixer un coût de liaison d'autres segments de liaison IP à une valeur supérieure ; et
un module d'acquisition de chemin (13), configuré pour calculer des informations de chemin concernant deux chemins séparés de couche routeur correspondants sur le réseau routeur selon le coût de liaison mis à jour de chaque segment de liaison IP, le module d'acquisition de chemin étant configuré spécifiquement pour calculer les informations de chemin concernant les deux chemins séparés de couche routeur correspondants sur le réseau routeur selon le coût de liaison mis à jour de chaque liaison IP, les deux chemins séparés de couche routeur ayant une somme de coûts de liaison minimum.

8. Appareil permettant de calculer des chemins de service séparés inter-couche selon la revendication 7, comprenant en outre :
un module d'attribution de ressource (14), configuré pour attribuer, sur le réseau physique, des ressources de canal de communication de couche physique pour les deux chemins séparés de couche routeur.

9. Appareil permettant de calculer des chemins de service séparés inter-couche selon la revendication 8, dans lequel le module d'attribution de ressource comprend :
une unité de détermination de chemin (141), configurée pour déterminer un des deux chemins séparés de couche routeur comme un chemin de travail et l'autre comme un chemin de protection ; et
une unité d'attribution de ressource (142), configurée pour attribuer une ressource de canal de communication de couche physique pour chaque segment de liaison IP que le chemin de travail traverse, et attribuer une ressource de canal de communication de couche physique pour chaque segment de liaison IP que le chemin de protection traverse.

10. Appareil permettant de calculer des chemins de service séparés inter-couche selon la revendication 9, dans lequel l'unité d'attribution de ressource (142) est configurée spécifiquement pour :
exclure, durant l'attribution de la ressource de canal de communication de couche physique pour chaque segment de liaison IP que le chemin de travail traverse, une ressource de canal de communication de couche physique requise par chaque segment de liaison IP que le chemin de protection traverse ; et
exclure, durant l'attribution de la ressource de canal de communication de couche physique pour chaque segment de liaison IP que le chemin de protection traverse, une ressource de canal de communication de couche physique requise par chaque segment de liaison IP que le chemin de travail traverse.

11. Système de communication, comprenant au moins trois noeuds de réseau d'un réseau routeur et au moins trois noeuds de réseau correspondants d'un réseau physique, l'appareil permettant de calculer des chemins de service séparés inter-couche selon l'une quelconque des revendications 7-10 étant placé sur le noeud de réseau du réseau routeur, et un noeud de réseau du réseau physique étant configuré pour calculer des informations de chemin concernant deux chemins séparés de couche physique depuis un point de début de service jusqu'à un point de fin de service sur le réseau physique et envoyer les informations de chemin concernant les deux chemins séparés de couche physique depuis le point de début de service jusqu'au point de fin de service au noeud de réseau du réseau routeur.
